# EUROPÄISCHE PATENTANMELDUNG

(11) **EP 0 996 245 A2**
(43) Veröffentlichungstag der Anmeldung: **26.04.2000**
(21) Anmeldenummer: 99114924.6
(22) Anmeldetag: 30.07.1999
(51) Int. Cl.: H04H 1/00, H04N 7/167, H04K 1/00

(54) **Einrichtung zum verschlüsselten Senden und Empfangen von Multimediaobjekten mit Verwendung des Übertragungssystems für den digitalen Hörrundfunk (DAB)**

(30) Priorität: 21.10.1998 DE 19848492
(71) Anmelder: ROBERT BOSCH GMBH, 70442 Stuttgart (DE)
(72) Erfinder: Bertram, Gerold, 30459 Hannover (DE); Lehning, Michael, Dr., 31137 Hildesheim (DE)

(57) **Zusammenfassung**

Bei einer Einrichtung zum verschlüsselten Senden von Multimediaobjekten beim digitalen Hör-Rundfunk (DAB) werden von jeweils einem in Datengruppen zur unverwürfelten Übertragung vorliegenden Multimediaobjekt mindestens die Daten einer dieser Datengruppen verwürfelt und in mindestens einer Datengruppe (Typ 5) zur verwürfelten Übertragung gespeichert. Zum empfangsseitigen Entwürfeln erforderliche Parameter werden in einen die Datengruppen enthaltenen Datenstrom eingefügt, der vor Übertragung gespeichert wird. Bei einer Einrichtung zum Empfangen von verschlüsselt übertragenen Multimediaobjekten werden zu jeweils einem Multimediaobjekt gehörende Datengruppen und zu verwürfelt übertragenen Datengruppen gehörende Zugriffsparameter gespeichert und nach Eintreffen einer Anforderungsmeldung für das jeweilige Multimediaobjekt mit Hilfe der gespeicherten Zugriffsparameter entwürfelt und zum Multimediaobjekt zusammengesetzt.

## Beschreibung

Die Erfindung betrifft eine Einrichtung zum verschlüsselten Senden von Multimediaobjekten beim digitalen Hör-Rundfunk, bei dem unter anderem jeweils Datengruppen zur Übertragung von Zugriffsparametern, Datengruppen zur unverwürfelten Übertragung von Multimediaobjekten und Datengruppen zur verwürfelten Übertragung von Multimediaobjekten vorgesehen sind und wobei die Zugriffsparameter Daten zum Entwürfeln der übertragenen verwürfelten Multimediaobjekte enthalten, sowie eine Einrichtung zum Empfangen von verschlüsselt übertragenen Multimediaobjekten.

Beim digitalen Hör-Rundfunk - im folgenden DAB wie Digital Audio Broadcasting genannt - können unter anderem sogenannte Multimediaobjekte unverschlüsselt und verschlüsselt übertragen werden. Die Verschlüsselung dient dazu, nur speziell berechtigten Teilnehmern den Empfang dieser Multimediaobjekte zu ermöglichen. Multimediaobjekte können Audio- und/oder Videosignale und andere Daten enthalten, wobei die Videosignale sowohl bewegte als auch unbewegte Bilder betreffen können.

In der DAB-Spezifikation ETS 300 401 des Europäischen Normungsinstituts ist die Struktur der beim DAB übertragenen Daten, insbesondere die Einteilung in Datengruppen, festgelegt. Gemäß europäischer Norm EN 301 234 werden Multimediaobjekte in Datengruppen vom Typ 3, 4 oder 5 übertragen. Die Datengruppen vom Typ 3 enthalten die Header-Informationen zum Multimediaobjekt, was im folgenden auch mit MOT-Objekt (MOT = Multimedia Objekt Transfer) bezeichnet wird. In den Datengruppen vom Typ 4 werden die eigentlichen Daten (MOT-Body), also der Inhalt, des MOT-Objektes übertragen. Der Inhalt kann jedoch auch verschlüsselt übertragen werden, wozu eine Verwürfelung des MOT-Bodys erfolgt und die verwürfelten Daten in Datengruppen vom Typ 5 übertragen werden. Die Parameter, die zum Entschlüsseln bzw. Entwürfeln der Datengruppen vom Typ 5 auf der Empfängerseite benutzt werden, werden in Datengruppen vom Typ 1 abgelegt und über einen Transport-Identifizierer mit den Datengruppen vom Typ 5 referenziert.

Empfängerseitig werden die Datengruppen vom Typ 5 entwürfelt, indem zuvor die zum Entwürfeln benötigten Informationen aus den Datengruppen vom Typ 1 ausgelesen werden.

Die Verschlüsselung und Entschlüsselung, das heißt, die Verwürfelung der MOT-Bodys und die empfängerseitige Entwürfelung, benötigen eine erhebliche Rechnerkapazität, die bereitgestellt werden muß, damit die verwürfelten Daten als Datengruppen vom Typ 5 innerhalb des gesamten Datenstroms zeitgerecht eingefügt werden können.

Die Aufgabe der Erfindung besteht darin, diesen Engpaß zu beseitigen, und wird bei der erfindungsgemäßen Einrichtung zum verschlüsselten Senden dadurch gelöst, daß von jeweils einem in Datengruppen zur unverwürfelten Übertragung vorliegenden Multimediaobjekt mindestens die Daten einer dieser Datengruppen verwürfelt und in mindestens einer Datengruppe zur verwürfelten Übertragung abgelegt werden und daß zum empfangsseitigen Entwürfeln erforderliche Parameter in einen die Datengruppen enthaltenen Datenstrom eingefügt werden, der vor der Übertragung gespeichert wird.

Der wesentliche Vorteil der erfindungsgemäßen Einrichtung zum verschlüsselten Senden besteht darin, daß eine zeitliche und/oder räumliche Entkopplung der MOT-Codierung und der Verwürfelung erfolgen und somit keine an den zu sendenden Datenstrom angepaßte Rechnerleistung erforderlich ist. Die Einrichtung ist zur Übertragung von Daten über alle im DAB für Datengruppen-Übertragung vorgesehene Wege geeignet, insbesondere zur Datenübertragung im Packet-Mode und im PAD-Kanal.

Die erfindungsgemäße Einrichtung kann senderseitig räumlich vom eigentlichen DAB-Sender getrennt werden. In dem DAB-Sender ist dann lediglich eine Schnittstelle vorhanden, in die der Strom von Datengruppen eingespeist werden kann.

Bei der erfindungsgemäßen Einrichtung zum Empfangen wird die Aufgabe dadurch gelöst, daß zu jeweils einem Multimediaobjekt gehörende Datengruppen und zu verwürfelt übertragenen Datengruppen gehörende Zugriffsparameter gespeichert werden und daß nach einer empfängerseitig erzeugten Anforderungsmeldung für das jeweilige Multimediaobjekt oder bei freien Systemresourcen die gespeicherten verwürfelt übertragenen Datengruppen mit Hilfe der gespeicherten Zugriffsparameter entwürfelt und zum Multimediaobjekt zusammengesetzt werden. Die Anforderungsmeldung kann manuell durch eine Benutzereingabe oder von einem an die Einrichtung angeschlossenes Gerät erzeugt werden.

Dabei besteht neben dem bereits für die Sendereinrichtung angegebenen Vorteil ein weiterer Vorteil, daß eine Entwürfelung nur einmal pro Segment ausgeführt wird und erst bei der Anforderung des Objektes durchgeführt werden muß. Bei wiederholt übertragenen Segmenten ist somit ein mehrfaches Entwürfeln nicht erforderlich. Komplette Multimediaobjekte, die empfängerseitig nicht wiedergegeben oder anderweitig verwertet werden sollen, brauchen überhaupt nicht entwürfelt zu werden. In der Empfangseinrichtung werden die einzelnen Datengruppen für ein MOT-Objekt aneinander gehängt und bei Anforderung durch den Benutzer gezielt entwürfelt.

Vorzugsweise ist bei der Empfangseinrichtung vorgesehen, daß die zu jeweils einem Multimediaobjekt gehörenden Datengruppen als Segmentfolge gespeichert werden und daß die Zugriffsparameter im Datenmultiplex in die Segmentfolge eingefügt werden oder daß die zu jeweils einem Multimediaobjekt gehörenden Datengruppen als Segmentfolge gespeichert werden und daß die Zugriffsparameter in getrennten Datenobjekten gespeichert werden. Diese Datenobjekte können bei Bedarf räumlich und/oder zeitlich getrennt von den Multimediaobjekten übertragen bzw. auf Datenträgern transportiert werden.

Ausführungsbeispiele der Erfindung sind in der Zeichnung anhand mehrerer Figuren dargestellt und in der nachfolgenden Beschreibung näher erläutert. Es zeigt:

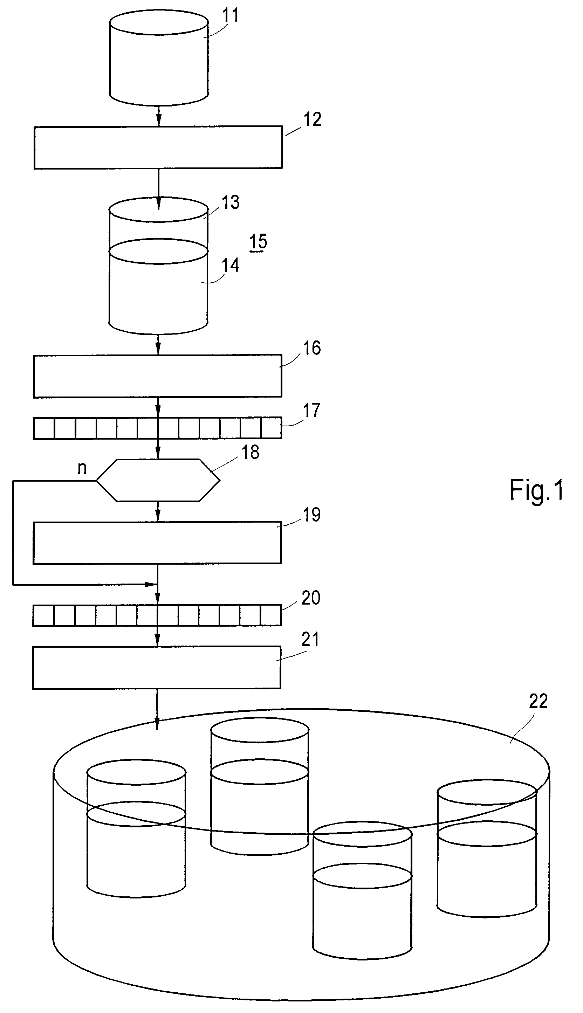

- Fig. 1: ein Ablaufdiagramm zur Erzeugung und Speicherung der Datengruppen in der Sendereinrichtung,
- Fig. 2: eine schematische Darstellung der Folge der Datengruppen bei der Codierung eines MOT-Objektes,
- Fig. 3: Beispiele für Datengruppenfolgen von MOT-Objekten nach der MOT-Codierung und Verwürfelung und
- Fig. 4: ein Ablaufdiagramm zur Offline-Verarbeitung von empfangenen Datengruppen in der Empfangseinrichtung.

Zur senderseitigen Erzeugung von Datengruppen wird ein verschlüsselt zu übertragendes Multimediaobjekt 11 einem MOT-Encoder 12 zugeführt. Dieser erzeugt einen MOT-Header 13 und einen MOT-Body 14, die zusammen das entsprechend dem Multimediaobjekt-Transferprotokoll codierte Multimediaobjekt 15 darstellen. Daraus wird bei 16 ein Datengruppenstrom erzeugt, der aus einer Datengruppensequenz 17 besteht, wobei Datengruppen vom Typ 3 und Typ 4 vorhanden sein können. Je nach Anforderungen an die einzelnen Verschlüsselungen kann es durchaus zweckmäßig sein, von einem verschlüsselt zu übertragenen Objekt lediglich einige Datengruppen zu verwürfeln. Dies kann beispielsweise erfolgen, um auch einem nicht berechtigten Empfänger den Empfang soweit zu ermöglichen, daß er Interesse an einer kostenpflichtigen Berechtigung bekommt.

Bei 18 wird entschieden, ob die jeweilige Datengruppe verwürfelt werden soll, worauf zutreffendenfalls bei 19 die Verwürfelung erfolgt. Bei 20 liegt dann eine Datengruppensequenz vor, die Datengruppen der Typen 1, 3, 4 und 5 enthalten kann. Dabei enthalten die Datengruppen vom Typ 1 Zugriffsparameter (Conditional Access Parameters), die dann als ECM-Datengruppe (Entitlement Control Message) bezeichnet werden. Datengruppen vom Typ 1 können jedoch auch allgemeine Informationen, beispielsweise Abonnementverlängerung, enthalten, wobei sie dann als EMM-Datengruppe bezeichnet werden (Entitlement Management Message). Letztere werden zur Entwürfelung und damit zur Entschlüsselung der verwürfelt übertragenen Datengruppen nicht unmittelbar benötigt.

Bei 21 wird der Datengruppenstrom bis zur Übermittlung an den Sender zwischengespeichert, was bei 22 schematisch für mehrere Objekte dargestellt ist.

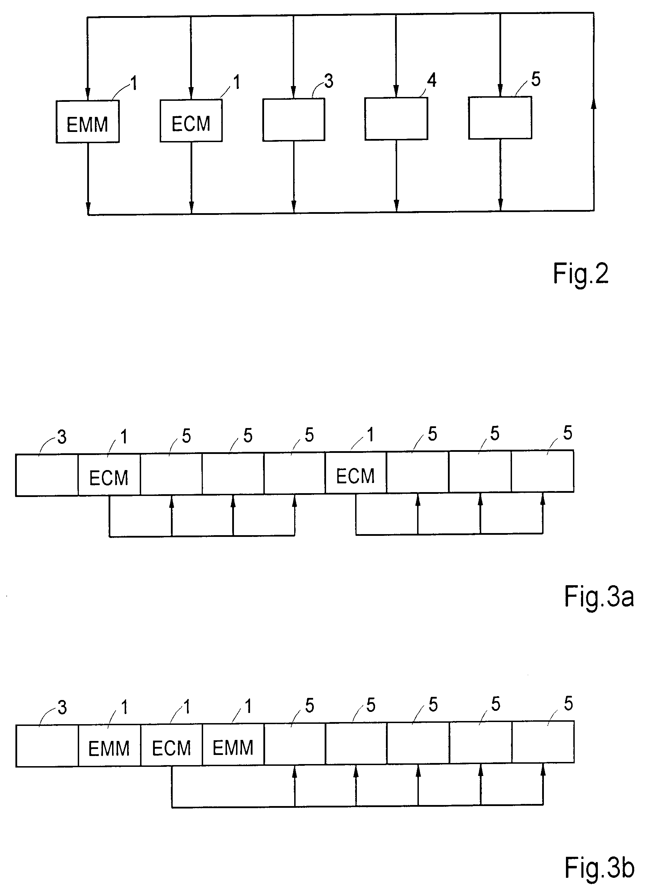

Fig. 2 symbolisiert die Folge von Datengruppen der verschiedenen Typen bei der Codierung eines Multimediaobjektes, wobei in Fig. 3a und 3b beispielhaft dargestellte Datengruppensequenzen entstehen. Datengruppen vom Typ 1 sind in den Figuren 2 und 3 mit dem Bezugszeichen 1, solche vom Typ 2 mit 2 usw. versehen. Einer Datengruppe vom Typ 4 (unverwürfelt) ist jeweils mindestens eine Datengruppe vom Typ 3 vorausgegangen, welche die Header-Information enthält. Einer Datengruppe vom Typ 5 (verwürfelte Übertragung) ist jeweils mindestens eine Datengruppe vom Typ 1 mit einer ECM (Entitlement Control Message) und eine Datengruppe vom Typ 3 (Header) vorausgegangen.

Bei der in Fig. 3a und 3b dargestellten Sequenz sind zusätzlich zu den einzelnen Datengruppen noch Referenzen (Links) von den eine Entitlement Control Message (ECM) enthaltenden Datengruppen vom Typ 1 zu den folgenden Datengruppen vom Typ 5 dargestellt, welche eine Entwürfelung der Datengruppen vom Typ 5 ermöglichen. Datengruppen vom Typ 1 mit einer Entitlement Management Message (EMM) werden zur Entschlüsselung der Datengruppen vom Typ 5 nicht benötigt, weshalb sie auch keinen Link zu den Datengruppen des Typs 5 aufweisen (Fig. 3b).

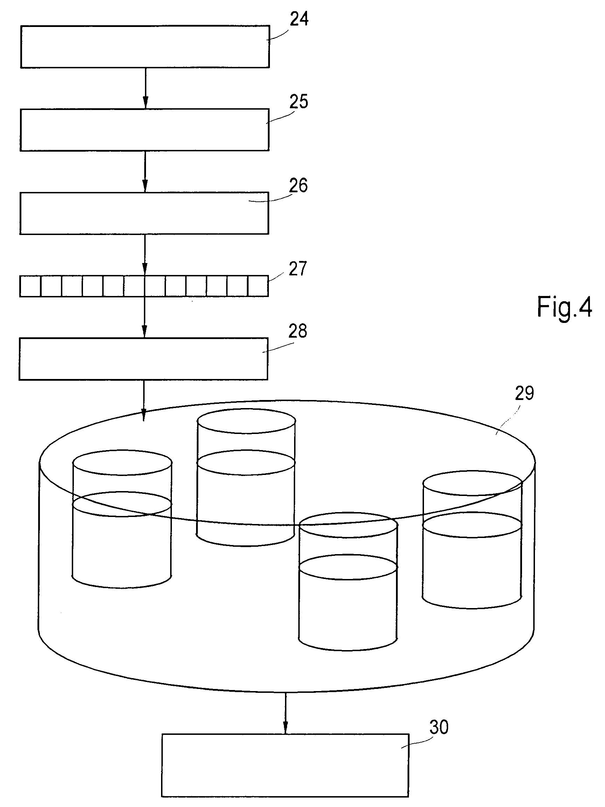

Fig. 4 zeigt die Verarbeitung der Datengruppen im Empfänger. Bei 24 werden die Datengruppen empfangen, worauf bei 25 der Datengruppentyp und die Transport-Identifizierer festgestellt werden. Bei 26 wird für jeweils ein Multimediaobjekt eine Segmentfolge aufgebaut und mit einer Referenz auf die Zugriffsparameter zwischengespeichert.

Dabei werden mehrfach empfangene Segmente verworfen. Bei 27 ist eine solche Segmentfolge, wie sie beispielhaft in Fig. 3 dargestellt ist, angedeutet. Diese Segmentfolge wird bei 28 in einen Pool übernommen, der bei 29 schematisch dargestellt ist. Bei 30 kann auf Anforderung oder bei Verfügbarkeit entsprechender Systemresourcen eine Entwürfelung der verwürfelt gespeicherten Objekte erfolgen.

## Patentansprüche

1. Einrichtung zum verschlüsselten Senden von Multimediaobjekten beim digitalen Hör-Rundfunk (DAB), bei dem unter anderem jeweils Datengruppen (Typ 1) zur Übertragung von Zugriffsparametern, Datengruppen (Typ 4) zur unverwürfelten Übertragung von Multimediaobjekten und Datengruppen (Typ 5) zur verwürfelten Übertragung von Multimediaobjekten vorgesehen sind und wobei die Zugriffsparameter Daten zum Entwürfeln der übertragenen verwürfelten Multimediaobjekte enthalten, dadurch gekennzeichnet, daß von jeweils einem in Datengruppen zur unverwürfelten Übertragung vorliegenden Multimediaobjekt mindestens die Daten einer dieser Datengruppen verwürfelt und in mindestens einer Datengruppe (Typ 5) zur verwürfelten Übertragung gespeichert werden und daß zum empfangsseitigen Entwürfeln erforderliche Parameter in einen die Datengruppen enthaltenen Datenstrom eingefügt werden, der vor Übertragung gespeichert wird.

2. Einrichtung zum Empfangen von verschlüsselt übertragenen Multimediaobjekten beim digitalen Hör-Rundfunk (DAB), bei dem unter anderem jeweils Datengruppen (Typ 1) zur Übertragung von Zugriffsparametern, Datengruppen (Typ 4) zur unverwürfelten Übertragung von Multimediaobjekten und Datengruppen (Typ 5) zur verwürfelten Übertragung von Multimediaobjekten vorgesehen sind und wobei die Zugriffsparameter Daten zum Entwürfeln der übertragenen verwürfelten Multimediaobjekte enthalten, dadurch gekennzeichnet, daß zu jeweils einem Multimediaobjekt gehörende Datengruppen und zu verwürfelt übertragenen Datengruppen gehörende Zugriffsparameter gespeichert werden und daß nach Eintreffen einer empfängerseitig erzeugten Anforderungsmeldung für das jeweilige Multimediaobjekt die gespeicherten verwürfelt übertragenen Datengruppen mit Hilfe der gespeicherten Zugriffsparameter entwürfelt und zum Multimediaobjekt zusammengesetzt werden.

3. Einrichtung zum Empfangen von verschlüsselt übertragenen Multimediaobjekten beim digitalen Hör-Rundfunk (DAB), bei dem unter anderem jeweils Datengruppen (Typ 1) zur Übertragung von Zugriffsparametern, Datengruppen (Typ 4) zur unverwürfelten Übertragung von Multimediaobjekten und Datengruppen (Typ 5) zur verwürfelten Übertragung von Multimediaobjekten vorgesehen sind und wobei die Zugriffsparameter Daten zum Entwürfeln der übertragenen verwürfelten Multimediaobjekte enthalten, dadurch gekennzeichnet, daß zu jeweils einem Multimediaobjekt gehörende Datengruppen und zu verwürfelt übertragenen Datengruppen gehörende Zugriffsparameter gespeichert werden und daß bei freien Systemresourcen die gespeicherten verwürfelt übertragenen Datengruppen mit Hilfe der gespeicherten Zugriffsparameter entwürfelt und zum Multimediaobjekt zusammengesetzt werden.

4. Einrichtung nach einem der Ansprüche 2 oder 3, dadurch gekennzeichnet, daß die zu jeweils einem Multimediaobjekt gehörenden Datengruppen als Segmentfolge gespeichert werden und daß die Zugriffsparameter im Datenmultiplex in die Segmentfolge eingefügt werden.

5. Einrichtung nach einem der Ansprüche 2 oder 3, dadurch gekennzeichnet, daß die zu jeweils einem Multimediaobjekt gehörenden Datengruppen als Segmentfolge gespeichert werden und daß die Zugriffsparameter in getrennten Datenobjekten gespeichert werden.

6. Einrichtung nach Anspruch 5, dadurch gekennzeichnet, daß die Datenobjekte, welche die Zugriffsparameter enthalten, bei Bedarf räumlich und/oder zeitlich getrennt von den Multimediaobjekten übertragen bzw. auf Datenträgern transportiert werden.
